# EUROPEAN PATENT SPECIFICATION

(11) **EP 1 390 626 B1**
(45) Date of publication and mention of the grant of the patent: **15.12.2004**
(21) Application number: 02722190.2
(22) Date of filing: 07.03.2002
(51) Int. Cl.: F16B 39/02, F16B 37/08

(54) **CLAMPING GAP NUT**
KLEMMSPALTMUTTER
ECROU DE SERRAGE A ESPACEMENT

(30) Priority: 13.05.2001 DE 20108026 U; 16.07.2001 DE 20111554 U; 11.10.2001 DE 20116636 U; 20.12.2001 DE 10162910
(43) Date of publication of application: 25.02.2004
(73) Proprietor: Landwehr, Wilhelm, 26388 Wilhelmshaven (DE)
(72) Inventor: Landwehr, Wilhelm, 26388 Wilhelmshaven (DE)
(74) Representative: Wess, Wolfgang
(86) International application number: PCT/EP2002/002529
(87) International publication number: WO 2002/093027

(56) References cited:
- WO-A-97/13955
- DE-A- 19 540 238
- DE-A- 19 604 680
- US-A- 1 433 528
- US-A- 3 618 994
- US-A- 4 033 394

## Description

The invention relates to a clamping gap nut which is preferably screwed onto an external thread of a rotary-driven shaft and clamped with a radial force of pressure, in order to axially fix a component to the shaft. The clamping gap nut is in principle, however, also advantageous for fixing a component to a non-rotary axis.

Secured nuts are conventionally used for fixing rotary-driven components, said nuts being screwed onto an external thread of a shaft which carries the component, up to the component or up to a bearing of the component. The nut is secured against detaching for example with the aid of a securing ring, which engages with the nut on the one hand and an axial groove of the shaft on the other and thus prevents the nut from detaching with a positive lock. The disadvantage of this solution is that the shaft is weakened by the groove, and furthermore the nut has to assume a very particular angular position relative to the shaft in order to be secured. The latter generally means that the axial force with which the nut can be pressed against the component to be fixed is limited by securing the nut, or even results in axial slack.

The disadvantages cited can be overcome by using clamping gap nuts. Known clamping gap nuts are provided with an axial gap which extends over the entire axial length of the nut in question. Once the clamping gap nut has been screwed on, a radial force of pressure is generated by reducing the tangential width of the gap over the entire circumference of the clamping gap nut, which presses the nut radially into the external thread which it is engaged with. This provides clamp connection with a non-positive lock which prevents the clamping gap nut from detaching. In order to tension the clamping gap nut, i.e. in order to draw together the two gap ends which between them enclose the gap and so to reduce the tangential width of the gap, the gap is bridged by one or more tensioning screws which are connected to each of the gap ends and transmit the tensile force required to draw the gap ends together between said gap ends. One problem with known clamping gap nuts is the danger of deforming the tensioning screws, which limits the clamping force.

It is an object of the invention to increase the clamping force which clamping gap nuts may achieve.

A clamping gap nut such as the invention relates to comprises an internal thread around a thread axis of the clamping gap nut, at least one gap and at least one tensioning element. The gap is formed between two gap ends of the clamping gap nut which face each other tangentially with respect to the thread axis. In a preferred embodiment, the gap is a straight gap throughout, extending parallel to the thread axis, i.e. an axial gap. This geometry of the gap is not, however, essentially required. The gap can for example exhibit a jagged course or an oblique course or even a winding course, as long as it is still ensured that the diameter of the internal thread is reduced by the gap ends moving towards each other in an at least substantially tangential direction, in order to obtain the desired radial force of pressure. Furthermore, the profiles of the gap ends can also exhibit any shape, as long as the function of the clamping gap nut can be ensured. A particularly preferred embodiment, however, is that the front peripheral surfaces of the gap ends directly facing each other are aligned straight, and substantially - preferably exactly - parallel.

The at least one tensioning element is connected to each of the gap ends, in order to exert a force on the gap ends which is tangential with respect to the thread axis of the clamping gap nut, said force causing the gap ends to move in a tangential direction relative to each other. The resultant force vector in the tensioning element does not essentially have to point in the tangential direction, although this is preferred, not least for reasons of stability and for the sake of simplicity in the construction. The directional detail "tangential" designates a direction which points perpendicular to both the thread axis and to an axis pointing radially with respect to the thread axis. In preferred embodiments, the force vector is exactly or at least substantially tangential. The tensioning element is preferably formed such that it can receive and transmit the tensile forces necessary to draw the gap ends together in order to reduce the gap. Although less preferred, the tensioning element can in principle also be exposed to pressure stresses when the gap ends are drawn together, for example if it acts on the gap ends via a lever mechanism. Forming it as a rigid tensile element which directly bridges the gap, however, is particularly advantageous when the clamping gap nut serves to fix a rotating component, to screwing down with a shaft, in order to keep a dynamic imbalance as small as possible. Such a clamping gap nut also requires the smallest space. A particularly preferred tensioning element is a tensioning screw which applies the force for clamping or detaching the clamping gap nut via a thread. In principle, it is also possible as an alternative to use a pneumatic or hydraulic cylinder or a linear drive, to name but a few examples.

According to the invention, the tensioning element is connected, such that it is angularly movable, i.e. rotatable, to at least one of the gap ends via a joint, in order to compensate for a change in direction of the force transmitted between the two gap ends by the at least one tensioning element. This results in the force-applying element, i.e. the tensioning element, being freely displaced. A bending load, which would result in additional tensions in the one or more tensioning elements, is avoided or at least noticeably reduced in comparison with a rigid connection. In the course of the relative movement by the two gap ends, which are drawn towards each other to clamp the clamping gap nut and pressed apart - preferably by the same tensioning element - to detach it, the gap ends move towards each other in the tangential direction non-linearly. A rotational movement is superimposed on the relative tangential movement and rotates the gap ends radially inwards as they are drawn together and radially outwards as they are pressed apart. The invention has recognised that this superimposed rotational movement results in the tensioning element tilting relative to the gap ends, through which unallowable bending tensions can be caused in the tensioning element. Through the jointed connection, by contrast, a uniform transmission of force, preferably over the entire surface, is maintained between the tensioning element and the gap end connected to it by the joint, even while the gap ends are moving relatively. The invention is particularly advantageous for large clamping gap nuts, for which a correspondingly large reduction in the clamping gap is required to clamp them. Reductions of the clamping gap of 2.5mm, measured tangentially, are common for a nut with an internal thread of 600mm in diameter. The large reduction in the clamping gap results in a undesirable mismatch of the surfaces facing the gap with respect to each other of an above-tolerance magnitude, in the example cited to a mismatch of 0.5°. Without the compensation in accordance with the invention, the tensioning element would be bent, in particular a preferably provided tensioning head could be tensioned obliquely and the tensioning element, in particular the tensioning head, thus deformed.

As compared to known nuts with a securing ring or securing plate, using a clamping gap nut for axially fixing a component to a fixed or rotating axis or a shaft is alone advantageous because reducing the diameter of the nut presses the internal thread of the clamping gap nut onto the thread of the axis or shaft. The pressing causes a static friction between the threads which secures the nut against undesirably detaching. Moreover, pressing on the internal thread also simultaneously generates an axial movement towards the component to be fixed. In order to fix the component, the untensioned nut is firstly screwed against the component with its facing side. Tightening the nut against the component builds up an axial force which presses the thread of the nut against the flanks of the thread of the shaft or axis and shifts radially outwards on the mating flanks of the thread of the shaft or axis, i.e. the clamping gap nut is widened. The subsequent drawing together of the gap ends is, however, caused not only by securing the nut on the external thread in a non-positive lock; rather, reducing the diameter of the internal thread of the nut also forces the flanks of the internal thread to be shifted radially inwards back onto the external thread. This sliding off of the adjacent flanks of the thread axially shifts the nut towards the component, which increases the tensioning force. Precisely at large shaft or axis diameters, this means a great advantage in assembly as compared to non-slit nuts, in particular from about a thread diameter of 300mm onwards. Large clamping gap nuts such as the invention proposes may in particular be advantageously used to axially fix bearing for wind-driven power plants, ship propulsion or other large-scale devices.

The joint is preferably formed as a revolute joint around a rotational axis fixed with respect to the gap end in question. However, it would also be perfectly conceivable to form the joint as a joint with a rotational axis which moves during the relative movement by the gap ends. If it is only a matter of compensating for changes in the direction of the force, the joint can also for example be formed as a ball-and-socket joint. For reasons yet to be explained, however, it is preferable if the joint only allows a rotational movement by the tensioning element relative to the gap end in a plane perpendicular to the thread axis of the clamping gap nut.

In preferred embodiments, the joint comprises bearing surfaces which have a sliding contact with each other in order to compensate for changes in the direction of the force when the gap ends are drawn towards each other. One of the bearing surfaces is connected to the gap end and the other bearing surface is connected to the tensioning element. The forces of pressure required to draw the gap ends together are transmitted between the bearing surfaces. In a preferred embodiment, the change in direction of the force are exclusively compensated for by a sliding movement between the bearing surfaces. In this case, the joint in accordance with the invention forms a purely sliding bearing. In principle, however, the change in direction of the force can instead be compensated for by a rolling contact or a mixed contact, i.e. a sliding and rolling contact. Thus, the joint can also be formed for example by means of a roll bearing, if sufficient space is available to install such a bearing.

A joint is also advantageous for detaching the nut. In particular where frictional corrosion has formed between the clamping gap nut and the shaft or axis forming the external thread, considerable forces also have to be applied to detach the nut, such that compensating in accordance with the invention is advantageous for this type of burden and possible even only for this type of burden. In a development, the joint therefore comprises bearing surfaces of the described type not only for clamping the clamping gap nut, but also or only for detaching it.

The clamping gap nut comprises an annular body of the nut which forms the internal thread and the gap. The body of the nut can be provided with add-on elements, for example add-on flanges, for engaging with a tensioning mechanism or more preferably a tensioning and detaching mechanism which contains the tensioning element. More preferably, however, the entire tensioning mechanism or entire tensioning and detaching mechanism is accommodated by the annular body of the nut itself, i.e. the tensioning mechanism or tensioning and detaching mechanism is integrated into the annular body of the nut.

The joint preferably comprises a joint element connected to the tensioning element. The joint element is connected, such that it is angularly movable, i.e. rotatable, to the at least one gap end, in order to compensate for the change in direction of the force. Particularly preferably, the joint element is rotatable around an axis which is perpendicular to the force at work in the tensioning element. The joint element is preferably a pivot of the joint, but can also be a bearing for a joint pivot. The joint element forms a round bearing surface of the joint on a side facing the other gap end. This bearing surface can in principle be rounded in two directions perpendicular to each other, however the bearing surface is preferably cylindrical, particularly preferably circular cylindrical. In a development of this, the joint element also forms a bearing surface of the type described on a side facing away from the other gap end. The joint element can in particular be a bolt. In a particularly preferred embodiment, the joint element is a cylinder which is connected - such that it is rotatable about its longitudinal axis - to the at least one gap end, and the force to be compensated for with respect to its direction is introduced into said cylinder, perpendicular to its rotational axis.

In an equally preferred embodiment, the tensioning element comprises a tensioning shoulder which is pressed on its underside against a bearing surface formed by or supported on one of the gap ends, when the gap ends are drawn together. Preferably, the underside of the tensioning shoulder or the underside of a bearing piece placed underneath is rounded such that the tensioning shoulder or the tensioning shoulder together with the bearing piece forms a pivot of the at least one joint or of another joint, via which the other gap end is also connected to the tensioning element. The tensioning shoulder is advantageously formed by a tensioning head of the tensioning element. The bearing surface of the tensioning shoulder is preferably spherical, which is particularly expedient when the tensioning element is a tensioning screw and the tensioning shoulder form the rounded bearing surface itself. If the bearing surface is formed by a bearing piece placed underneath, it is likewise preferably spherical or it is cylindrical. The tensioning element in these embodiments is thus preferably supported on a ball socket.

The tensioning element is preferably connected to the at least one gap end in such a way that a rotational movement of the tensioning element around a rotational axis pointing in the direction of the force to be transmitted by the tensioning element causes a relative movement between the tensioning element and the at least one gap end along the rotational axis of the tensioning element. A simple and particularly preferred example of such a tensioning element is a tensioning screw. The tensioning screw can in particular be in thread engagement with a joint element of the described type. A direct thread engagement with one of the gap ends, i.e. a connection which is not jointed with respect to the compensating movement in accordance with the invention, is also possible.

Lastly, a tensioning element comprising two thread sections, of which one is left-hand and the other is right-hand, also represents a preferred embodiment. Such a tensioning element can with its two threads be advantageously connected with a respective joint to both gap ends, each of the threads via a joint element of the described type. Equally, the jointed connection can be to just one gap end, while the thread engagement with the other gap end is rigid with respect to the compensating movement in accordance with the invention, for example by there being a direct thread engagement with said other gap end.

The connection between the gap ends via the at least one tensioning element is preferably so rigid parallel to the thread axis of the clamping gap nut that the tensioning element counteracts an axial offsetting movement by the gap ends, i.e. an axial, relative movement between the gap ends, and ideally completely prevents such a movement. Axial offsetting movements may be due to material tensions released when the gap is produced. To this end, the tensioning element should be as rigid as possible with respect to bending forces acting in the direction of the thread axis of the clamping gap nut. The tensioning element is caused to axially guide the gap ends by an axially appropriately rigid connection between the tensioning element and each of the two gap ends or by the gap ends narrowly guiding the tensioning element in the direction of the thread axis of the clamping gap nut. A combination of the two measures can also be employed. Thus, a shank section of a bolt-shaped tensioning element, in particular a tensioning screw, can be narrowly guided in a shank passage, by producing the shank section and the shank passage to narrow tolerances, i.e. narrowly fitting them to each other with respect to the thread axis of the clamping gap nut. The shank passage can in particular be formed as an elongated hole or as a radially open groove which exhibits its small diameter in the direction of the thread axis for narrow guidance and its large diameter radially, or an opening on one or both sides to enable the compensating movement by the tensioning element.

Furthermore, it is preferable if the shank area of the tensioning element is hardened.

The gap ends can also be axially guided by at least one suitable component which is not a tensioning element, or by appropriately configuring the gap ends themselves. In this case, the tensioning element preferably does not take on any axial guiding function. The guiding component may for example be a bolt which is screwed to a gap end and which extends in its longitudinal direction in a plane aligned at right angles to the thread axis of the internal thread of the nut and projecting towards the other gap end. The other gap end is provided with a recess with which the guiding component engages. The recess narrowly guides the guiding component axially and allows the movement of the guiding component required for clamping the nut. The recess can in particular be formed as a guiding slit. Alternatively, the gap ends can form guiding sections on their facing sides, said guiding sections lying side-by-side with a narrow axial slack such that the gap ends are guided to each other themselves. The guiding surfaces of the sections of the gap ends guided to each other are in a radial plane with respect to the thread axis of the internal thread of the nut. Thus, the gap ends can form teeth on their facing sides, said teeth engaging with each other and so ensuring that the gap ends are axially guided to each other.

The tensioning element can project through a passage provided in one of the gap ends and pointing towards the other gap end. In this case, the tensioning element comprises a tensioning aid on a rear side accessible from without, which a tensioning tool can join onto. If the tensioning element is formed by a tensioning screw with a left-hand thread on one section of the tensioning element and a right-hand thread on another section of the tensioning element, then a tensioning aid for engaging with a tool is preferably formed between the two sections of the tensioning element, and arranged in the gap, i.e. accessible for the tool, through the gap. Which of the two variants is to be preferred depends not least on the accessibility at the site of installation.

In preferred embodiments, an installation space is provided in the at least one gap end in an annular body of the nut forming the internal thread and the gap ends, said space itself forming a bearing surface of the joint. In particular, a bore can form the bearing surface. Alternatively, the joint can also be accommodated in its entirety in the installation space, i.e. in this embodiment, the installation space does not itself form a bearing surface, on which relative movement directly takes place in order to compensate for changes in the direction of the force. Thus, a joint bushing forming a sufficiently wide radial passage for the tensioning element can for example be accommodated in the installation space, while a joint pivot connected to the tensioning element and in this case forming the joint element cited is rotationally supported in the joint bushing.

A solution which combines the advantage of force reception and tangential introduction into the gap end with the advantage of a smaller space requirement provides for the locating of a force-receiving piece which forms a bearing surface just for when tensile forces are transmitted by the tensioning element. The force-receiving piece can form the bearing surface on the side of the installation space facing the other gap end, together with a bearing surface of the installation space or on its own. It receives the radial forces exerted by the tensioning element and introduces them, preferably tangentially, into the gap end forming the installation space.

The force is preferably introduced by means of a positive lock, by the force-receiving piece being supported on a wall of the gap end which points perpendicular or at least substantially perpendicular to the tensile force at work in the tensioning element. Instead or in addition, the force-receiving piece can be connected to the gap end with a non-positive lock or even a material lock.

The clamping gap nut can comprise the gap formed in accordance with the invention as its only gap. However, it can also comprise another or several other divisions, which can likewise be formed in accordance with the invention, but need not be. If several divisions are present, then each of the sections of the clamping gap nut between the divisions extends through an annular arc of at most 180°. This enables the clamping gap nut to be mounted on a shaft or an axis without the nut having to be applied via a free end of the shaft or axis. For example, in order to examine a component, for instance the running surfaces of the roll bearing, dismantling the entire subassembly arranged in front of the nut is not necessary.

In order to facilitate screwing the clamping gap nut onto an external thread of a shaft or axis, the clamping gap nut preferably comprises a centring chamfer on at least one end. The centring chamfer is formed by the clamping gap nut exhibiting an expediently smooth, cylindrical internal shell surface in the end section in question. The shape of the centring chamfer is adapted to the shape of the shaft or axis, in general it will be circular cylindrical with a diameter having a slight excess as compared to the external thread of the shaft or taxis,: to enable it to thread-up on the external thread of the shaft of axis. Advantageously, the internal diameter of the end section which forms the centring chamfer corresponds to the external diameter of the internal thread of the clamping gap nut. In this way, the centring chamfer can be obtained, for example, by turning off the internal thread on a lathe, down to the base of the thread. A centring chamfer can be formed on each of the two axial end sections of the clamping gap nut, however a centring chamfer is preferably formed on one of the two end sections only.

Further advantageous embodiments are described by the sub-claims.
- Figure 1: a clamping gap nut according to a first example embodiment, in cross-section;
- Figure 2: a gap area of the clamping gap nut of Figure 1;
- Figure 3: the gap area in a substantially tangential sectional view;
- Figure 4: a clamping gap nut according to a second example embodiment, in cross-section;
- Figure 5: the gap area of the clamping gap nut of Figure 4, in a tangential sectional view;
- Figure 6: a clamping gap nut according to a third example embodiment, in a forward view and a partial cross-section;
- Figure 7: the gap area of the clamping gap nut of Figure 6, in a tangential sectional view;
- Figure 8: a clamping gap nut according to a fourth example embodiment, in cross-section;
- Figure 9: the gap area of the clamping gap nut of Figure 8, in a tangential sectional view;
- Figure 10: a clamping gap nut according to a fifth example embodiment, in cross-section;
- Figure 11: the gap area of the clamping gap nut of Figure 10, in cross-section;
- Figure 12: the tangential sectional view A-A entered in Figure 10;
- Figure 13: the tangential sectional view C-C entered in Figure 11;
- Figure 14: the tangential sectional view B-B entered in Figure 11;
- Figure 15: the clamping gap nut of Figures 6 and 7 in the forward view from Figure 6.

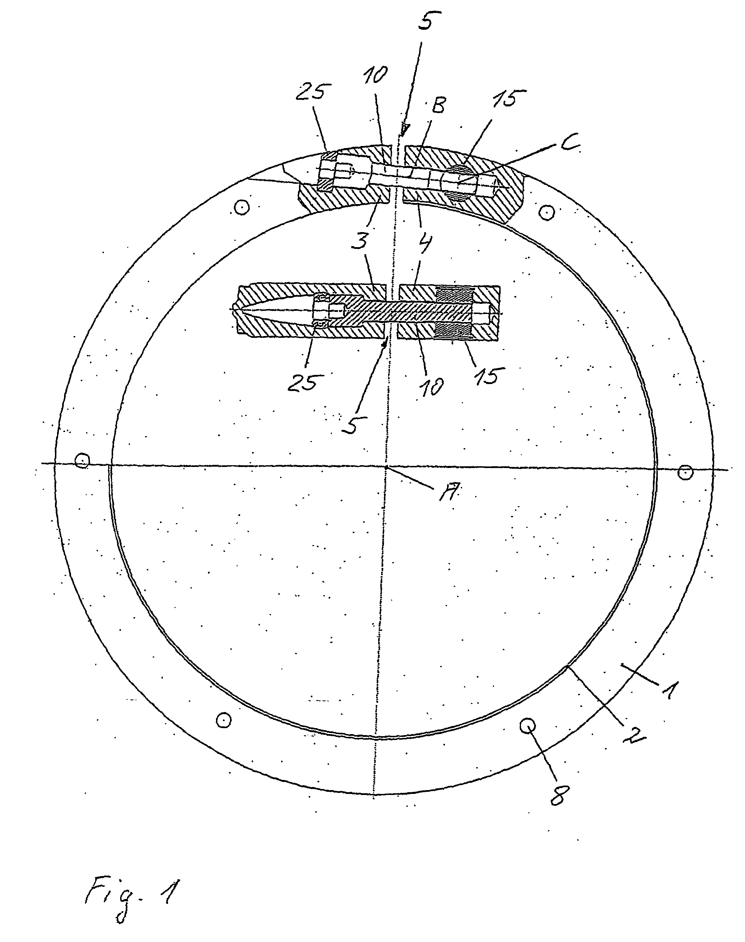

Figure 1 shows a cross-section of a clamping gap nut consisting of a circular cylindrical body 1 of the nut and an integrated clamping and detaching mechanism for radially narrowing and widening the body 1 of the nut. The body 1 of the nut is provided with an internal thread 2 which revolves around a thread axis A which simultaneously also forms the longitudinal axis of the body 1 of the nut. Providing nothing in the following is said otherwise, the directional details 'axial', 'radial' and 'tangential' relate to the thread axis A.

The body 1 of the nut possesses tightening aids 8, which in the example embodiment. are worked out of a facing side of the body 1 of the nut as axial pocket bores in a uniform distribution. The tightening aids 8 serve in engaging a tool for tightening the clamping gap nut.

The axial length, i.e. the height of the body 1 of the nut, is preferably selected from the range 15mm to 300mm. The internal thread 2 preferably exhibits an internal diameter between 200 and 1500mm, i.e. it is preferably a 200-thread to 1500-thread. These ranges are preferred ranges of size for any clamping gap nut in accordance with the invention.

The body 1 of the nut is divided axially once. The division is formed by an axial dividing gap 5 which is delimited by a free, left-hand gap end 3 and a free, right-hand gap end 4 of the body 1 of the nut. The gap ends 3 and 4 oppose each other tangentially. The front peripheral edges of the gap formed by them are straight surfaces which each extend axially and substantially radially, preferably parallel.

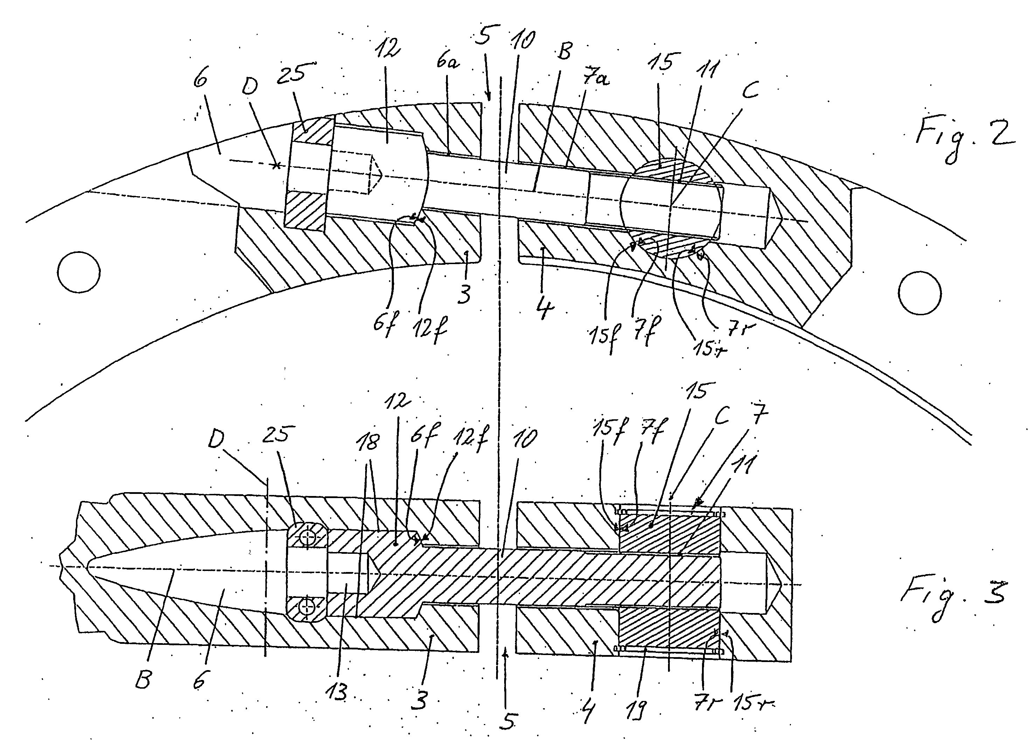

The gap area is shown enlarged in Figure 2.

The clamping and detaching mechanism comprises a tensioning element 10 which directly bridges the gap 5 tangentially, wherein a slight inclination in the cross-sectional plane (radial plane) as compared to the exact tangential would be disregarded. The tensioning element 10 is connected to the left-hand gap end 3 and the right-hand gap end 4 such that the gap ends 3 and 4 can be drawn towards each other by a tensile stress of the tensioning element 10 and pressed apart from each other by a pressure stress of the tensioning element 10 in the opposite direction. Since the body 1 of the nut is annular and comprises no other divisions beyond the gap 5, it forms a sort of lock washer and primarily experiences an elastic deformation through narrowing and widening, compared to which any minor plastic deformation may be disregarded. For this reason, a swivelling movement is superimposed on the tangential movement of the gap ends 3 and 4 when the body 1 of the nut is narrowed and widened, said swivelling movement guiding the gap ends 3 and 4 out relative to each other, in addition to the tangential movement. If the tensioning element 10 were rigidly connected both to the left-hand gap end 3 and to the right-hand gap end 4, then this superimposed movement of the gap ends 3 and 4 would result in a bending or buckling load and therefore in the tensioning element 10 bending and/or buckling. In the example embodiment, however, the tensioning element 10 is connected to the left-hand gap end 3 via a joint and to the right-hand gap end 4 via another joint. Each of the two joints ensures that the change in direction, which the force acting on the tensioning element 10 experiences relative to the gap ends 3 and 4 when these are drawn together, is compensated for. Due to the jointed connection, no radial forces are able to act on the tensioning element 10, or said forces are reduced to a below-tolerance degree. Ideally, only a mono-axial state of either tensile or pressure tensions exists in the tensioning element 10 between the connection to the left-hand gap end 3 and the connection to the right-hand gap end 4, in the radial plane relative to the thread axis A.

The tensioning element 10 is correspondingly an element exposed to tensile and/or pressure stresses. Forming the tensioning element 10 as a tensioning screw, as in the example embodiments, corresponds to preferred embodiments. In the first example embodiment, the tensioning element 10 comprises a shank having a front thread section 11 and a rear, smooth shank section which the tensioning head 12 abuts. The left-hand gap end 3 is provided with a passage 6 which points in a straight line from the external shell surface of the body 1 of the nut towards the right-hand gap end 4. The passage 6 is formed as a passage bore with several bore diameters which decrease incrementally towards the gap 5, to form a shank passage 6a, a front bearing surface 6f for the tensioning head 12 and a receptacle for a holding piece 25.

An installation space 7 is worked out of the right-hand gap end 4, in which a joint element 15 of the right-hand joint is accommodated. The joint element 15 is a bolt; in the example embodiment a circular cylindrical body having a longitudinal axis C. It comprises a bore which is radial with respect to said longitudinal axis C and which is provided with an internal thread which fits the thread 11 of the tensioning element 10. The radial bore for the tensioning element 10 can be a pocket bore or, as in the example embodiment, a passage bore. The installation space 7 is an axial bore and forms an axially extended, circular cylindrical bearing surface for the joint element 15. The bearing surface formed by the installation space 7 and the bearing surface formed by the external shell of the joint element 15 form a revolute joint based on a purely sliding contact.

In the right-hand gap end 4, a shank passage 7a for the tensioning element 10 extends from the gap 5 into the installation space 7. The shank passage 7a is lengthened beyond the installation space 7 as a pocket bore. This passage 7a exhibits an excess as compared to the shank of the tensioning element 10 radially, i.e. in a radial direction with respect to the thread axis A. The left-hand passage 6 also exhibits a radial excess as compared to the shank of the tensioning element 10 in its shank passage 6a which extends from the bearing surface 6f into the gap 5. The radial excess is sufficiently large to enable the rotational movement between the gap ends 3 and 4 described, without the tensioning element 10 bending.

In order to establish the jointed connection to the two gap ends 3 and 4, the tensioning element 10 is inserted through the passage 6 and advanced up into the bore of the joint element 15. As soon as a thread engagement with the joint element 15 has been established, the tensioning element 10 is screwed down about its own longitudinal axis B, which simultaneously forms its thread axis, with the joint element 15, until the tensioning head 12 abuts the bearing surface 6f with its underside. An internal polyhedron, for example a hexagon, is worked out of the rear side of the tensioning head 12 as a tightening aid 13, with which an appropriate tool can engage.

The joint element 15 is the joint pivot of the revolute joint which connects the tensioning element 10 to the right-hand gap end 4. The bearing surfaces of the joint element 15 and installation space 7, concentric and in sliding contact, are in accordance with their function, namely transmitting the pressure force between the joint element 15 and the gap end 4 in the case of tensile stress and in the case of the tensioning element 10 being exposed to pressure stresses, subdivided into bearing surfaces halves, designated by the reference numerals 7f and 7r for the installation space 7 and by the reference numerals 15f and 15r for the joint element 15. The front (with respect to the gap 5) bearing surface pairing 7f/15f transmits the force when the gap 5 is narrowed, and the rear (with respect to the gap 5) bearing surface pairing 7r/15r transmits the force when the gap 5 is widened. As far as the left-hand gap end 3 is concerned, the tensioning head 12 directly forms the joint pivot of the left-hand joint, which is also formed as a revolute joint, and the body 1 of the nut directly forms the bearing. The rotational axis C of the right-hand joint and the rotational axis D of the left-hand joint are parallel to the thread axis A of the body 1 of the nut. Furthermore, they cut and point perpendicular to the longitudinal axis B of the tensioning element 10, i.e. they are perpendicular to the axis of the tensile and possibly pressure force for narrowing and possibly widening the body 1 of the nut. To form the left-hand joint, the bearing surface 6f and the underside of the tensioning head 12 form concentric, round, front (with respect to the gap 5) bearing surfaces 6f and 12f for a similarly pure sliding contact. Because the tensioning element 10 is formed as a tensioning screw, the bearing surfaces 6f and 12f of this bearing surface pairing are spherical segment surfaces.

The tensioning head 12 is sunk into the passage 6. An axially fitted holding piece 25 is arranged, axially immovable, on its rear side, wherein the term 'axial' relates in this case to the axis B of the tensioning element 10. The holding piece 25 is fitted to the tensioning head 12 such that the compensating movement is not obstructed but the tensioning element 10 is blocked from moving in a direction away from the right-hand gap end 4 relative to the left-hand gap end 3, such that the body 1 of the nut can also be widened by means of a pressure force in the tensioning element 10. The holding piece 25 comprises a central passage bore through which a tool can be engaged with the tightening aid 13. It is accommodated in a groove of the left-hand gap end 3 to secure it axially with respect to the axis B, and additionally screwed to the gap end 3, as can be seen in Figure 3.

As may be seen in Figure 3, the joint pivot of the left-hand joint, i.e. the tensioning head 12, is narrowly guided axially in the passage 6. The pairs of surfaces on both sides of the tensioning head 12 and of the passage 6 form an axial guide 18 between the left-hand gap end 3 and the tensioning element 10. An axial guide is also formed between the right-hand gap end 4 and the tensioning element 10, by the joint element 15 being obstructed from moving axially relative to the gap end 4. The right-hand axial guide is formed with the aid of two securing elements 19, which in the example embodiment are annular elements. On each of the two facing sides of the joint element 15, a securing element 19 is accommodated in a receiving groove of the body 1 of the nut, narrowly fitted axially to the joint element 15 and axially immovable. To form this axial guide, it is most obvious to form each of the securing elements 19 as a slit lock washer, which is pushed into the installation space 15, elastically narrowed, until it snaps into its respective receiving groove. Through the rigidity of the tensioning element 10 combined with the left-hand axial guide 18 and the right-hand axial guide 19, the clamping and detaching mechanism as a whole maintains an axial guide of the two gap ends 3 and 4 relative to each other, which counteracts offsetting movements by the gap ends 3 and 4.

In the example embodiment, the installation space 7 is formed as an axial passage bore in the body 1 of the nut. It can also be formed as a pocket bore. Furthermore, it can also be open towards the external shell surface of the body 1 of the nut, as may the passage 6 and the shank passage 7a, in order to be able to assemble the tensioning element 10 and the joint element 15 already screwed down.

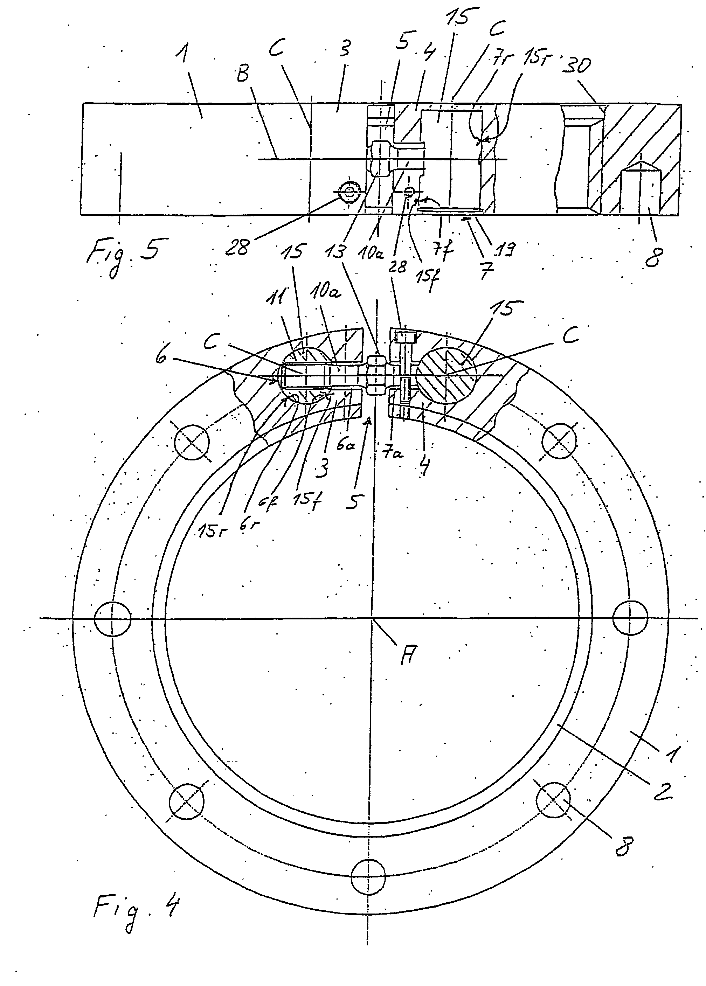

If a component, in particular a roll bearing of a subassembly, is to be axially secured on a shaft or axis, then the body 1 of the nut is firstly pushed onto an end of the shaft or axis and thus already centred with respect to the end of the shaft or axis. This is achieved by a centring chamfer, not shown in the first example embodiment, with which the body 1 of the nut is provided on an axial facing side. The centring chamber extends axially a few millimetres from the end of the facing side in question and has the external diameter of the internal thread, i.e. the diameter of the base of the thread. A slight excess is possibly also added to the external thread of the shaft or axis, to facilitate pushing it on. Because of the centring chamfer, the clamping gap nut - which can exhibit a considerable weight - need not be elewhere supported to be assembled. The centring chamfer of the first example embodiment is formed like the centring chamfer of, for example, the second example embodiment, designated 30 in Figure 5.

The clamping gap nut is pushed on via its centring chamfer until internal thread 2 engages with the external thread of the shaft. It is then screwed onto the external thread, up to the component to be fixed, such that it presses against the component with a certain axial tensioning force. This presses it onto the flanks of the external thread and slightly widens it.

In a third step, the clamping and detaching mechanism of the body 1 of the nut is then narrowed, such that the internal thread 2 is radially pressed into the external thread of the shaft, to generate static friction force between the two threads, which securely prevents the clamping gap nut from detaching by itself. To narrow the body 1 of the nut, the two gap ends 3 and 4 are drawn tangentially towards each other on the one hand, and on the other bend radially inwards. This latter rotational movement is compensated for in both gap ends 3 and 4 by the jointed connection on both sides of the tensioning element 10. The shank passages 6a and 7a formed in the gap ends 3 and 4, and through which the tensioning element 10 extends into each of the joints, are configured - as mentioned - with an appropriate excess as compared to the tensioning element 10, so that the tensioning element 10 is not bent in the passages 6a and 7a. Even more important than this likewise desirable prevention of bending is that no forces are acting on the contact,surfaces transmitting the force between the tensioning element 10 and the two gap ends 3 and 4, i.e. on the bearing surface pairings 6f/12f and 7f/15f, which could result in the tensioning element 10 being misloaded and, for example, the tensioning head 12 thus being deformed. Through the clamping gap nut being narrowed, the nut with its internal thread 2 slides radially inwards on the flanks of the external thread of the shaft, and is simultaneously pressed axially against the component by this sliding movement due to the angle of the flank, such that by clamping the clamping gap nut, the axial tensioning force acting on the component is also enlarged.

To detach the clamping gap nut, for example in order to inspect or exchange the component, the tensioning element 10 is rotated back in thread engagement with the joint element 15. Due to the tensioning element 20 being axially blocked by the holding piece 25, rotating it back generates a non-positive lock which causes the body 1 of the nut to widen. As earlier when clamped, a change in direction relative to the gap ends 3 and 4 of the force at work in the tensioning element 10, resulting from the body 1 of the nut being widened, is compensated for. Due to frictional corrosion possibly forming, the forces required to detach the nut can be considerable, such that the invention is also greatly advantageous for detaching. Once the clamping gap nut has been forcibly detached with the aid of the clamping and detaching mechanism, it can be rotated out of thread engagement without any problems and taken off the shaft, in order to gain access to the component.

Figures 4 and 5 show a cross-section and a tangential sectional view of a clamping gap nut according to a second example embodiment. In the second example embodiment, the tensioning element is modified and designated 10a. Furthermore, it differs with respect to the left-hand joint, which in the second example embodiment is formed with a joint element 15 similar to that in the first example embodiment. The right-hand joint is also formed with such a joint element 15 in the second example embodiment. As far as the sliding function is concerned, the two joints of the second example embodiment correspond to the right-hand joint of the first example embodiment, such that reference is made to that description. Difference exist with respect to assembly.

The tensioning element 10 is again formed as a bolt, but as a double bolt comprising two shank sections projecting out in a row from the middle section. One of the two shank sections comprises a thread section with a left-hand thread and the other of the two shank sections comprises a thread section with a right-hand thread. The middle section forms a tensioning aid 13 which is a polyhedron, for example a hexagon. The tensioning aid 13 serves to introduce a torque by means of a tool. By turning the tensioning element 10a about its longitudinal axis B, either a tensile force or a pressure force is generated, as in the first example embodiment, said force drawing the two joint elements 15 towards each other or pressing them away from each other. Once tensioned, the tensioning element 10a is free of torsion forces, such that no tensions or forces can operate which tend to detach the tensioning element 10a. It is therefore not necessary to secure the tensioning element 10a against detaching by itself.

The clamping and detaching mechanism of the second example embodiment is assembled from a facing side of the body 1 of the nut. The installation spaces of the body 1 of the nut are both identically configured, each as a pocket bore, as may be seen in Figure 5 for the installation space 7 of the right-hand gap end 4. The passage 6a and 7a extending from these installation spaces into the gap 5 are shaped as grooves which open onto the same facing side of the body 1 of the nut as the installation spaces. The tensioning element 10a is screwed to the two joint elements 15 before assembly, and in this state inserted into the two installation spaces and the two passages 6a and 7a opening onto a facing side. This arrangement consisting of the tensioning element 10a and the two joint elements 15 is then axially secured, by inserting a securing element 19, narrowly fitted axially as in the first example embodiment, in front of each of the joint elements 15, in order to thus prevent the arrangement from moving axially relative to the gap ends 3 and 4. Thus, the tensioning element 10a again forms an axial guide via its two joint elements 15, said guide counteracting an axial offset of the gap ends 3 and 4. The two areas, between which the respective passage 6a and 7a is formed radially without and radial within for each of the gap ends 3 and 4, are radially reinforced by reinforcing elements 28. The reinforcing elements 28 are each formed by a countersunk screw which holds the two cited areas of the gap ends 3 and 4 together in a substantially radial direction and, when the tensioning element 10a is exposed to tensile stresses, protects it against mismatching.

A centring chamfer, identical to that configured in the first example embodiment, is designated 30 in Figure 5.

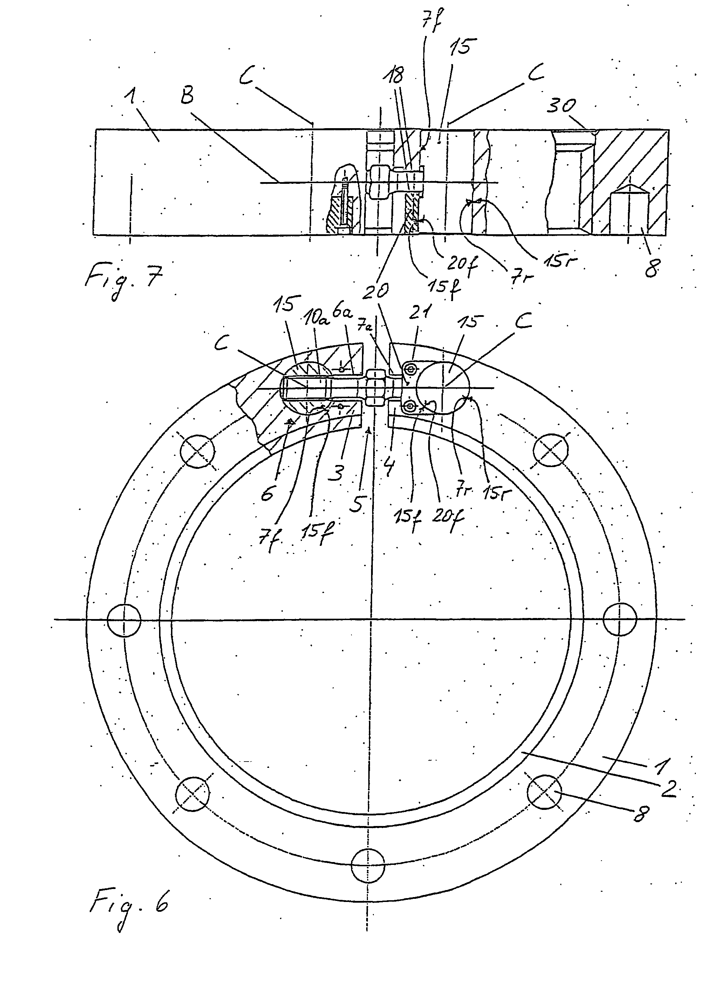

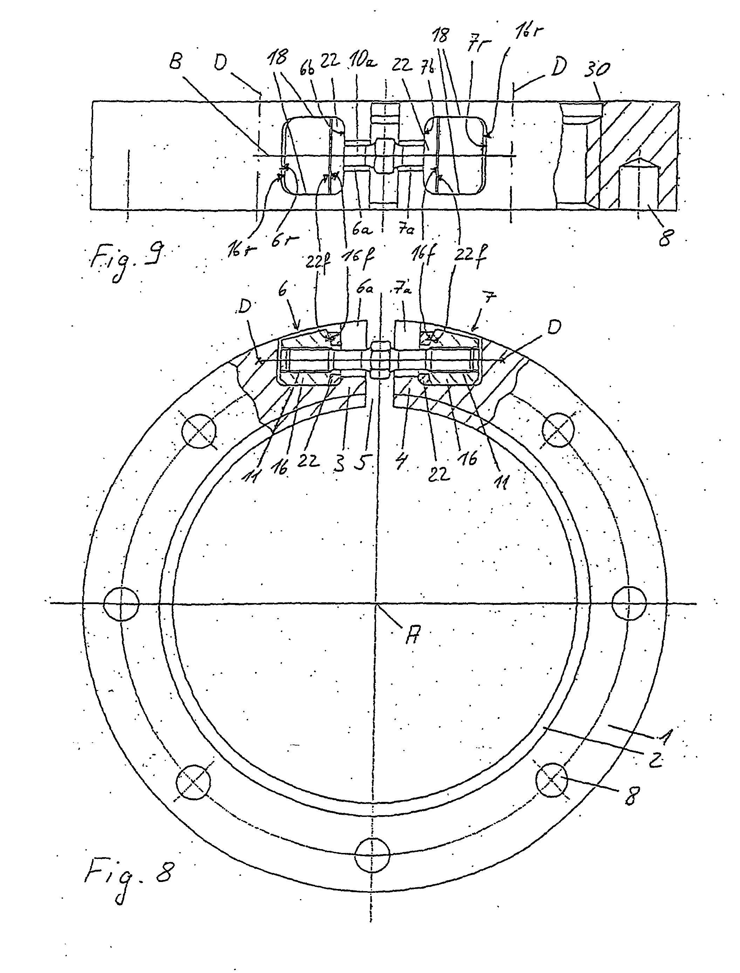

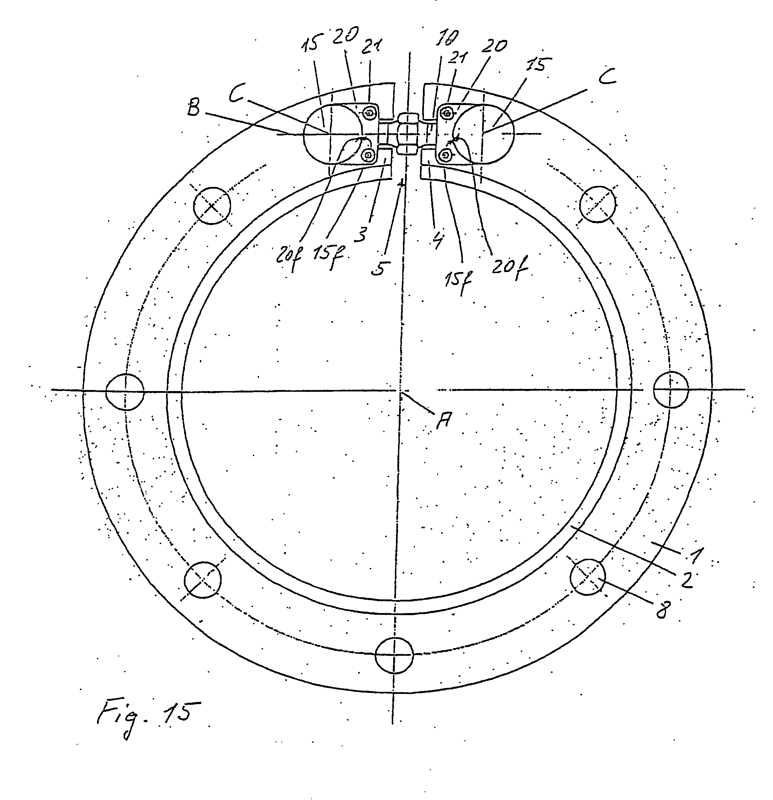

Figures 6 and 7 show a clamping gap nut which is modified preferably as compared to the second example embodiment with respect to the two joints. In Figure 6, the left-hand joint is shown in a cross-section and the right-hand joint in a forward view. Figure 15 shows both joints in a forward view. Apart from where statements are made regarding the third example embodiment, the configurations of the second example embodiment, and therefore also of the references therein to the first example embodiment, apply.

A bearing surface 20f of each of the two joints, exposed to pressure stresses when the gap ends 3 and 4 are drawn together, is formed by a force-receiving piece 20 which is attached axially joined to the body 1 of the nut. The body 1 of the nut forms fitting surfaces for the force-receiving pieces 20, such that they are held by the body 1 of the nut with a tangential and radial positive lock. Axially, they are held on the gap end by means of connecting screws 21. The connecting screws 21 primarily serve merely to hold the force-receiving pieces 20 while the clamping gap nut is screwed onto an external thread and while the clamping gap nut is otherwise handled. According to their shape and function, the joint elements 15 correspond to the joint elements 15 of the second example embodiment, such that reference may be made to that description.

The force-receiving pieces 20, together with the body 1 of the nut, form the bearing surfaces which receive the force when the gap ends 3 and 4 are drawn together. Alternatively, they can also form the bearing surfaces near the gap on their own. The force-receiving pieces 20 are sufficiently rigid that they are not deformed by the load. The forces arising are introduced into the body 1 of the nut via the force-receiving pieces 20 in such a way that the forces acting on the gap ends 3 and 4 only operate in the tensile direction, i.e. in the straight connecting line between the two rotational axes C, and in such a way that radial forces which could cause the body 1 of the nut to mismatch in the area of the passages 6a and 7a practically do not arise. In the example embodiment, the body 1 of the nut also forms bearing surfaces 7f which receive a part of the force. The bearing surfaces 7f are closed, i.e. they do not comprise a passage, such that a mismatch in this area plays no part to start off with.

A particularity of the force-receiving piece 20 is that the cylindrical bearing surface 20 f and 7r formed jointly by the force-receiving piece 20 and the respective installation space 6 or 7 of the body 1 of the nut exhibits a slight deficit relative to the joint elements 15 immediately after the force-receiving piece 20 has been inserted. The jointly formed bearing surface 7f, 20f and 7r or the jointly formed bearing surface 20f and 7r (if the force-receiving piece 20 alone receives the force when the gap ends 3 and 4 are drawn together) is only reworked to its nominal size, for example turned out, once the force-receiving piece 20 has been inserted. In this way, particularly narrow fits to the bearing surfaces 15f and 15r of the joint element 15 may be achieved.

In the example embodiment, the force-receiving pieces 20 do not completely extend over half the length of the joint element 15. In an embodiment variant, however, they could have the same length as the joint element 15 or the body 1 of the nut and be provided with a passage for the tensioning element 10a, wherein said passage - as incidentally also the passages 6a and 7a of the two gap ends 3 and 4 - should not obstruct the relative movement between the tensioning element 10a and the gap ends 3 and 4 made possible in accordance with the invention.

The two installation spaces 6 and 7 of the body 1 of the nut are formed as circular cylindrical passage bores, such that an axial guide of the two gap ends 3 and 4 has to be ensured some other way, if this is desired. In the third example embodiment, the shank areas of the tensioning element 10a are narrowly guided axially in the passages 6a and 7a which extend from the gap 5 to each of the joint elements 15. As may be seen in particular from the example of the right-hand gap end 4 in Figure 7, the guiding surfaces 18 for axial guiding in the gap ends 3 and 4 are formed by the body 1 of the nut and the respective force-receiving piece 20. In addition, reference may also be made to the configurations in the first example embodiment.

For the sake of completeness, it should be mentioned that the two joints are preferably identically configured, but can in principle also be different, which in addition applies to all the embodiments of the invention. One of the joints, for example the left joint in the third example embodiment, can thus also correspond to a joint according to, for example, the second example embodiment.

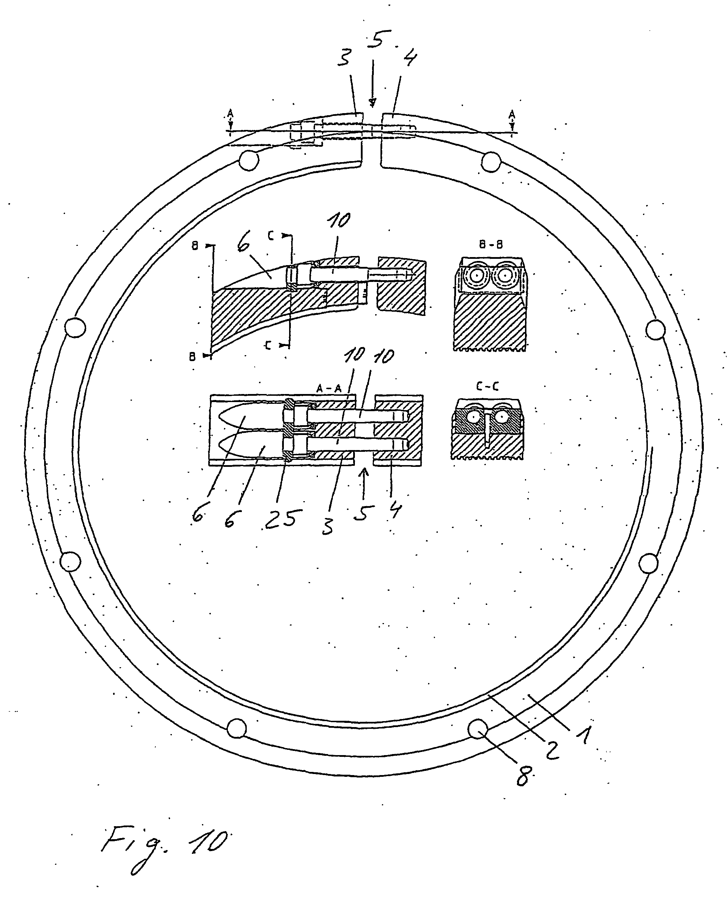

Figures 8 and 9 show a clamping gap nut according to a fourth example embodiment which differs from the second and third example embodiments in the formation of the left-hand and right-hand joint.

In the fourth example embodiment, the forces are transmitted onto the gap ends 3 and 4 via a left-hand force-receiving piece 22 and a right-hand force-receiving piece 22, when the body 1 of the nut is narrowed. The forces which arise when the body 1 of the nut is widened, however, are directly received by the installation spaces 6 and 7 of the body 1 of the nut. The joint elements of the fourth example embodiment are modified as compared to the joint elements 15 of the other example embodiments, and are therefore designated 16. They are not formed by cylinders, but by bodies tapering outwards tangentially. Their front bearing surfaces 16f, facing each other, are however again cylindrical, preferably circular cylindrical, and for the compensating movement of the tensioning element 10a they slide away on congruent, concentric opposite surfaces 22f formed by the force-receiving pieces 22. The pressure forces required to widen the body 1 of the nut are introduced by the tensioning element 10a via the two joint elements 16 immediately on the rear sides of the installation spaces 6 and 7, and via their rear bearing surfaces 6r and 7r into the body 1 of the nut.

The installation space 6 in the left-hand gap end 3 and the installation space 7 in the right-hand gap end 4 each form a seating surface 6b and 7b for the force-receiving pieces 22. The two installation spaces 6 and 7 are open towards the external shell surface of the body 1 of the nut, such that the arrangement consisting of the tensioning element 10a, the two joint elements 16 and the force-receiving pieces 22 can be inserted, from the external shell surface of the body 1 of the nut, into the installation position shown in Figures 8 and 9. Each of the two installation spaces 6 and 7 broadens, from the external shell surface of the body 1 of the nut, radially inwards. The seating surfaces 6b and 7b near the gap, formed by the installation space 6 and 7, point towards each other at an angle of more than 0° in cross-section, said angle opening radially outwards. The rear bearing surfaces 6r and 7r of the installation spaces 6 and 7 point towards each other at an angle of more than 0° in cross-section, said angle opening radially inwards. Due to this geometry of the installation spaces 6 and 7, forces arise between the force-receiving pieces 22 and the seating surfaces 6b and 7b when the body 1 of the nut is narrowed, said forces coercing the tensioning element 10a, the joint elements 16 and the force-receiving pieces 22 radially inwards. This secures the position of the arrangement in the installation spaces 6 and 7. The same effect is achieved when the body 1 of the nut is widened, through the angle between the rear bearing surfaces 6r and 7r.

An axial guide of the two gap ends 3 and 4 relative to each other is again formed via narrow axial fits on the joint elements 16, as in the first and second example embodiments. The corresponding guiding surfaces of the body 1 of the nut are again designated 18. Moreover, the thread fits between the tensioning element 10a and the joint elements 16 are also selected to be narrow, which incidentally also applies to all the other example embodiments. The shank passages 6a and 7a are formed on each of the gap ends 3 and 4 as a groove which is open towards the external shell surface of the body 1 of the nut, and offers sufficient space radially inwards from the tensioning element 10a for the possible relative movement in accordance with the invention between the tensioning element 10a and the gap ends 3 and 4.

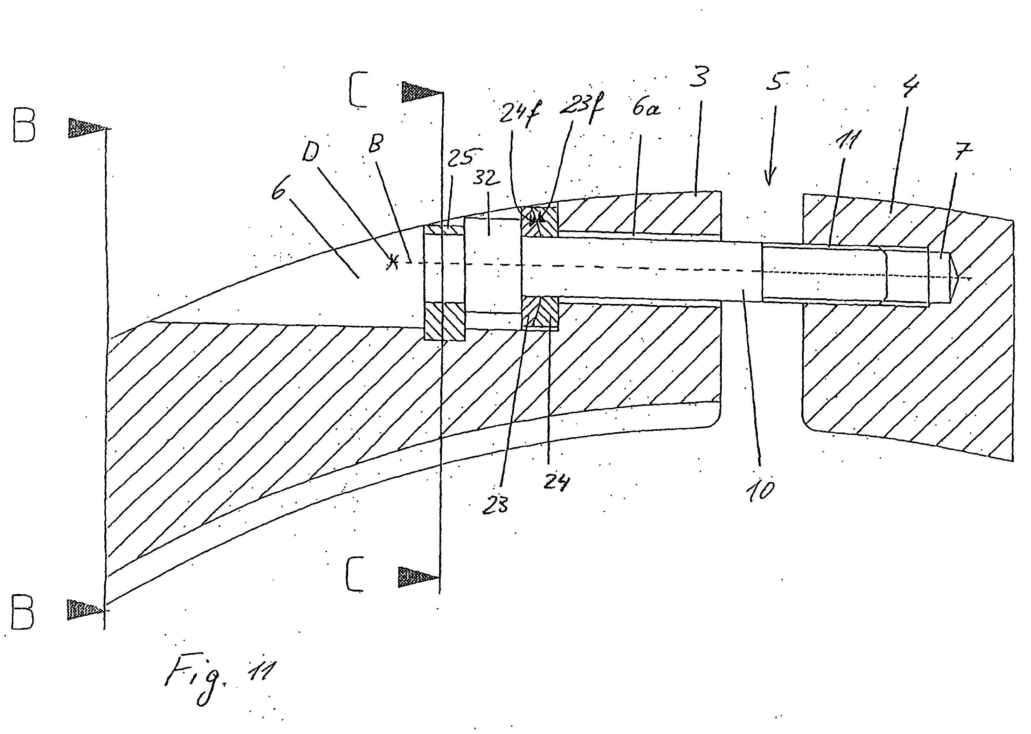

Figures 10 to 14 show a clamping gap nut according to a fifth example embodiment whose clamping and detaching mechanism comprises two identical tensioning elements 10, but which apart from the doubling of the number of tensioning elements 10 is simplified as compared to the other example embodiments. The simplification is that the two tensioning elements 10 are each directly connected to the right-hand gap end 4 by a simple screw connection. Thus, only the movement of the screw is possible as a relative movement between the tensioning elements 10 and the right-hand gap end 4. The two installation spaces 9 of the right-hand gap end 4 are formed as simple thread bores. The connection to the left-hand gap end 3, however, is again jointed, to compensate for the change in direction of the force introduced via the tensioning elements 10.

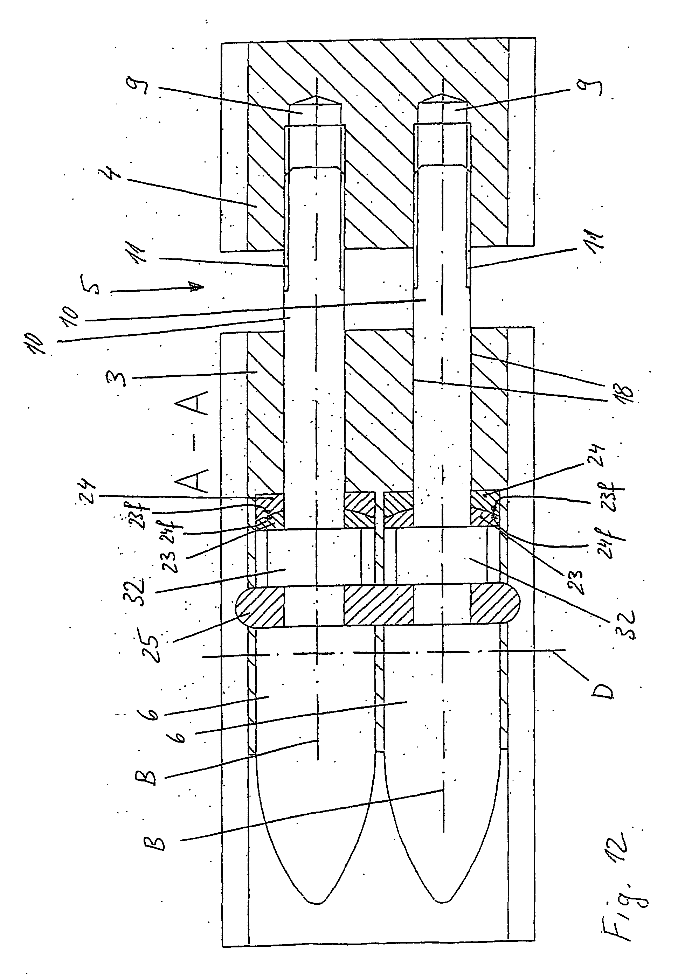

The joint on the left-hand gap end 3 substantially corresponds to the left-hand joint of the first example embodiment. It is, however, modified as compared to the first example embodiment by the use of a force-receiving piece 24. This is most easily seen from the cross-section in Figure 11, in combination with the tangential sectional view in Figure 12.

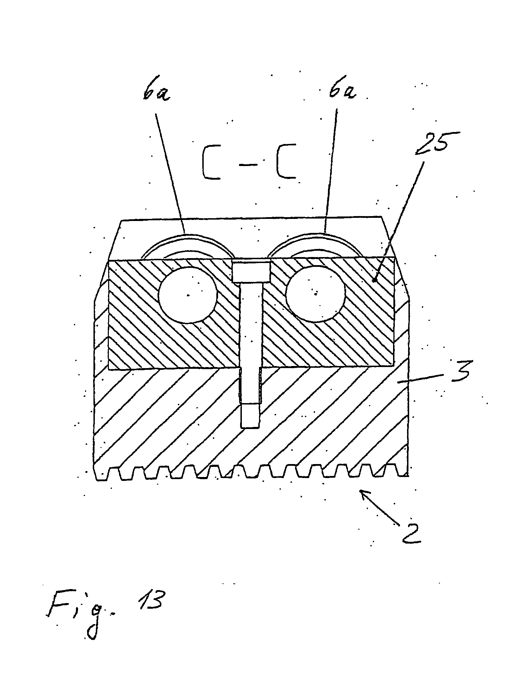

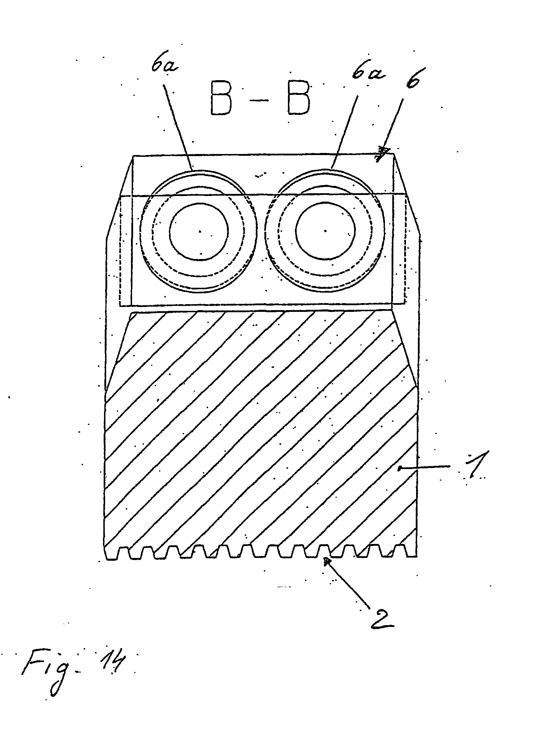

The bearing surfaces 23f and 24f of the left-hand joint, which slide across each other, are surfaces of a circular cylinder or of a sphere. The bearing surface 23f is formed by a substantially discoid bearing piece 23 which surrounds the shank of the tensioning element 10 and is placed against the underside of the tensioning head 32. The bearing surface 24f is formed by the force-receiving piece 24 which introduces the forces applied by via the tensioning element 10 into the body 1 of the nut. An angularly movable cylindrical socket or ball socket is provided by the bearing surface pairing 23f/24f. The shank passage 6a in the left-hand gap end 3 is formed as an elongated hole which extends longer radially than axially. With respect to this, reference may also be made to Figures 13 and 14. An axial guide 18 of the shank areas and a narrow thread fit counteract axial offsetting movements of the gap ends 3 and 4.

As may be seen in particular from Figures 12 and 13, a common holding piece 25 is used for fixing the two tensioning elements 10 effectively in the direction of the force, said holding piece otherwise corresponding, however, to the holding piece 25 of the first example embodiment.

Each of the nuts comprises a slide coating, made for example of PTFE, on its assembly facing side, with which it is pressed against the component to be fixed, or it is formed to be low-frictional on its assembly facing side by another measure. The tensioning element or several tensioning elements is/are hardened in the shank area. Hardening the bearing surface(s) which form(s) a tensioning element and/or a joint element also corresponds to a preferred embodiment.

### List of Reference Numerals:

- 1: body of the nut
- 2: internal thread
- 3: gap end
- 4: gap end
- 5: gap
- 6: passage, installation space
- 6a: shank passage
- 6b: seating surface
- 6f: front bearing surface
- 6r: rear bearing surface
- 7: installation space
- 7a: shank passage
- 7b: seating surface
- 7f: front bearing surface
- 7r: rear bearing surface
- 8: tightening aid
- 9: installation space
- 10: tensioning element
- 10a: tensioning element
- 11: thread
- 12: tensioning head, tensioning shoulder
- 12f: bearing surface
- 13: tensioning aid
- 14: -
- 15: joint element, joint pivot
- 15f: front bearing surface
- 15r: rear bearing surface
- 16: joint element, joint pivot
- 16f: front bearing surface
- 16r: rear bearing surface
- 17: -
- 18: axial guide
- 19: axial guide, securing element
- 20: force-receiving piece
- 20f: front bearing surface
- 21: connecting screw
- 22: force-receiving piece
- 22f: front bearing surface
- 23: bearing piece, bearing disc
- 23f: bearing surface
- 24: force-receiving piece
- 24f: bearing surface
- 25: holding piece, holding plate
- 26: -
- 27: -
- 28: reinforcing element
- 29: -
- 30: centring chamfer
- 31: -
- 32: tensioning head
- A: axis of the nut
- B: axis of the tensioning element
- C: joint axis
- D: joint axis

## Claims

1. A clamping gap nut, comprising:
a) an internal thread (2) about a longitudinal axis (A) of said clamping gap nut;
b) at least two gap ends (3, 4) which face each other tangentially and between them form a gap (5);
c) and at least one tensioning element (10; 10a) connected to each of said gap ends (3, 4), for exerting a force on said gap ends (3, 4) which causes a relative movement of said gap ends (3, 4) in a tangential direction, wherein
d) said at least one tensioning element (10; 10a) is connected, angularly movable, to at least one of said gap ends (3, 4) via a joint which compensates for a change in direction of said force caused by said relative movement of said gap ends (3, 4).

2. The clamping gap nut as set forth in claim 1, **characterised in that** said joint comprises bearing surfaces (e.g. 6f/12f, 7f/15f, 7r/15r) which are in sliding contact and/or rolling contact with each other, for compensating for said change in direction of said force, when said gap ends (3, 4) are drawn towards each other and/or pressed away from each other.

3. The clamping gap nut as set forth in any one of the preceding claims, **characterised in that** said tensioning element (10; 10a) is connected to a joint element (15; 16) of said joint, said joint element being rotatably connected to said at least one gap end (3; 4) to compensate for said change in direction of said force.

4. The clamping gap nut as set forth in the preceding claim, **characterised in that** said joint element (15; 16) forms a round, preferably cylindrical bearing surface (15f; 16f) on a side facing the other gap end (4; 3) and/or a round, preferably cylindrical bearing surface (15r; 16r) on a side facing away from the other gap end (4; 3), said bearing surface being one of the bearing surfaces of said joint.

5. The clamping gap nut as set forth in any one of the preceding claims 3 and 4, **characterised in that** said joint element (15) is a cylinder which is connected, rotatable about its longitudinal axis (C), to said at least one gap end (3; 4).

6. The clamping gap nut as set forth in any one of the preceding claims, **characterised in that** said tensioning element (10; 10a) is connected to said gap ends (3, 4) such that a rotational movement of said tensioning element (10; 10a) about an axis (B) pointing in the direction of said force causes a relative movement along said axis (B) between said tensioning element (10; 10a) and said at least one gap end (3; 4) connected via said joint to said tensioning element (10; 10a).

7. The clamping gap nut as set forth in the preceding claim, **characterised in that** said tensioning element (10; 10a) is in thread engagement with a joint element (15; 16) of said joint or with a body (1) of the nut forming said other gap end (4; 3).

8. The clamping gap nut as set forth in any one of the preceding claims, **characterised in that** said tensioning element (10; 10a) is connected to said gap ends (3, 4) in such a way and/or is guided in passages (6a, 7a) of said gap ends (3, 4) with a narrow fit in the direction of the thread axis (A) of said clamping gap nut such that said tensioning element (10; 10a) counteracts an axial offsetting movement of said gap ends (3, 4).

9. The clamping gap nut as set forth in any one of the preceding claims, **characterised in that** one (3) of said gap ends (3, 4) is provided with a passage (6) in which said tensioning element (10) may be inserted towards the other (4) of said gap ends (3, 4), and through which said tensioning element (10) projects, wherein a bearing surface (6f; 24f) is formed in said passage (6), said bearing surface (6f; 24f) receiving said force exerted by said tensioning element (10) when said gap ends (3, 4) are drawn towards each other.

10. The clamping gap nut as set forth in the preceding claim, **characterised in that** said tensioning element (10) comprises a tensioning shoulder which forms a joint pivot of said joint, wherein said tensioning shoulder is preferably formed by a tensioning head (12; 32).

11. The clamping gap nut as set forth in any one of the preceding claims 9 and 10, **characterised in that** said tensioning element (10) is connected to said gap ends (3, 4) in such a way that a rotational movement of said tensioning element (10) about an axis (B) pointing in the direction of said force causes a relative movement along said axis (B) between said tensioning element (10) and said at least one of said gap ends (3, 4), and **in that** a movement along said axis (B) between said tensioning element (10) and the other of said gap ends (3, 4) is blocked by a holding piece (25).

12. The clamping gap nut as set forth in any one of the preceding claims, **characterised in that** an annular body (1) of the nut forming said internal thread (2) and said gap ends (3, 4) comprises an installation space (6; 7) in said at least one gap end (3; 4), in which said tensioning element (10; 10a) is supported on a bearing surface (6f, 6r, 12f, 22f, 24f; 7f, 7r, 20f, 22f) of said joint, directly or via a joint element (15; 16), wherein said body (1) of the nut can form said bearing surface (6f, 6r; 7f, 7r) directly or a force-receiving piece (24; 20, 22) supported in said installation space (6; 7) can form said bearing surface (24f; 20f, 22f).

13. The clamping gap nut as set forth in any one of the preceding claims, **characterised in that** said joint comprises a joint pivot (15; 16; 32/23) connected to said tensioning element (10; 10a) and a bearing surface (20f; 22f; 24f) for said joint pivot (15; 16; 32/23), said bearing surface (20f; 22f; 24f) being formed by a force-receiving piece (20; 22; 24), for receiving a force exerted by said joint pivot (15; 16; 32/23) radially with respect to its joint axis (C; D), and introducing it at least predominantly tangentially into said at least one gap end (3; 4) connected via said joint to said tensioning element (10; 10a), on which gap end said force-receiving piece (20; 22; 24) is supported.

14. The clamping gap nut as set forth in any one of the preceding claims, **characterised in that** a body (1) of the nut which forms or contributes to forming said clamping gap nut is divided into at least two parts, such that said body (1) of the nut can be placed on a shaft or axis from a direction perpendicular to said shaft or axis and can be screwed onto an external thread of said shaft or axis.

15. The clamping gap nut as set forth in any one of the preceding claims, **characterised in that** said clamping gap nut comprises a centring chamfer (30) on at least one axial facing side, wherein said clamping gap nut can be pushed onto an end of an external thread of a shaft or axis via said centring chamfer (30), for the purpose of centring said clamping gap nut.

16. The clamping gap nut as set forth in any one of the preceding claims, **characterised in that** it is used for axially fixing a component on a shaft or axis, wherein said component is preferably a roll bearing of a large constructional unit or machine, for example of a wind power plant, water turbine or a roll mill.

## Patentansprüche

1. Klemmspaltmutter umfassend:
a) ein Innengewinde (2) um eine Längsachse (A) der Klemmspaltmutter,
b) wenigstens zwei Spaltenden (3, 4), die tangential einander zugewandt sind und einen Spalt (5) zwischen sich bilden,
c) und wenigstens ein Spannelement (10; 10a), das mit jedem der Spaltenden (3, 4) verbunden ist, um auf die Spaltenden (3, 4) eine Kraft auszuüben, die eine Relativbewegung der Spaltenden (3, 4) in tangentialer Richtung bewirkt, wobei
d) das wenigstens eine Spannelement (10; 10a) mit wenigstens einem der Spaltenden (3, 4) winkelbeweglich über ein Gelenk verbunden ist, das eine durch die Relativbewegung der Spaltenden (3, 4) verursachte Richtungsänderung der Kraft ausgleicht.

2. Klemmspaltmutter nach Anspruch 1, **dadurch gekennzeichnet, dass** das Gelenk Lagerflächen (z.B. 6f/12f, 7f/15f, 7r/15r) aufweist, die miteinander in einem Gleitkontakt und/oder Wälzkontakt sind, um die Richtungsänderung der Kraft auszugleichen, wenn die Spaltenden (3, 4) aufeinander zu gezogen und/oder voneinander weg gedrückt werden.

3. Klemmspaltmutter nach einem der vorhergehenden Ansprüche, **dadurch gekennzeichnet, dass** das wenigstens eine Spannelement (10; 10a) mit einem Gelenkelement (15; 16) des Gelenks verbunden ist, das für den Ausgleich der Richtungsänderung der Kraft drehbar mit dem wenigstens einen Spaltende (3; 4) verbunden ist.

4. Klemmspaltmutter nach dem vorhergehenden Anspruch, **dadurch gekennzeichnet, dass** das Gelenkelement (15; 16) an einer dem anderen Spaltende (4; 3) zugewandten Seite eine runde, vorzugsweise zylindrische Lagerfläche (15f; 16f) und/oder an einer von dem anderen Spaltende (4; 3) abgewandten Seite eine runde, vorzugsweise zylindrische Lagerfläche (15r; 16r) bildet, die eine der Lagerflächen des Gelenks ist.

5. Klemmspaltmutter nach einem der Ansprüche 3 und 4, **dadurch gekennzeichnet, dass** das Gelenkelement (15) ein Zylinder ist, der um seine Längsachse (C) drehbar mit dem wenigstens einen Spaltende (3; 4) verbunden ist.

6. Klemmspaltmutter nach einem der vorhergehenden Ansprüche, **dadurch gekennzeichnet, dass** das wenigstens eine Spannelement (10; 10a) mit den Spaltenden (3, 4) so verbunden ist, dass eine Drehbewegung des Spannelements (10; 10a) um eine in Richtung der Kraft weisende Achse (B) eine Relativbewegung zwischen dem Spannelement (10; 10a) und dem wenigstens einen gelenkig mit dem Spannelement (10; 10a) verbundenen Spaltende (3; 4) entlang der Achse (B) bewirkt.

7. Klemmspaltmutter nach dem vorhergehenden Anspruch, **dadurch gekennzeichnet, dass** das wenigstens eine Spannelement (10; 10a) mit einem Gelenkelement (15; 16) des Gelenks oder mit einem das andere Spaltende (4; 3) bildenden Mutternkörper (1) in einem Gewindeeingriff ist.

8. Klemmspaltmutter nach einem der vorhergehenden Ansprüche, **dadurch gekennzeichnet, dass** das Spannelement (10; 10a) mit den Spaltenden (3, 4) so verbunden ist und/oder in Durchgängen (6a, 7a) der Spaltenden (3, 4) mit in Richtung der Gewindeachse (A) der Klemmspaltmutter enger Passung geführt ist, dass durch das Spannelement (10; 10a) einer axialen Versatzbewegung der Spaltenden (3, 4) entgegengewirkt wird.

9. Klemmspaltmutter nach einem der vorhergehenden Ansprüche, **dadurch gekennzeichnet, dass** eines (3) der Spaltenden (3, 4) mit einem Durchgang (6) versehen ist, in dem das Spannelement (10) in Richtung auf das andere (4) der Spaltenden (3, 4) einführbar ist und den das Spannelement (10) durchragt, wobei in dem Durchgang (6) eine Lagerfläche (6f; 24f) gebildet ist, welche die von dem Spannelement (10) ausgeübte Kraft aufnimmt, wenn die Spaltenden (3, 4) aufeinander zu gezogen werden.

10. Klemmspaltmutter nach dem vorhergehenden Anspruch, **dadurch gekennzeichnet, dass** das Spannelement (10) eine Spannschulter aufweist, die einen Gelenkzapfen des Gelenks bildet, wobei die Spannschulter vorzugsweise von einem Spannkopf (12; 32) gebildet wird.

11. Klemmspaltmutter nach einem der Ansprüche 9 und 10, **dadurch gekennzeichnet, dass** das Spannelement (10) mit den Spaltenden (3, 4) so verbunden ist, dass eine Drehbewegung des Spannelements (10) um eine in Richtung der Kraft weisende Achse (B) eine Relativbewegung zwischen dem Spannelement (10) und dem wenigstens einen der Spaltenden (3, 4) entlang der Achse (B) bewirkt und dass eine Bewegung entlang der Achse (B) zwischen dem Spannelement (10) und dem anderen der Spaltenden (3, 4) durch ein Haltestück (25) blockiert wird.

12. Klemmspaltmutter nach einem der vorhergehenden Ansprüche, **dadurch gekennzeichnet, dass** ein ringförmiger Muttemkörper (1), der das Innengewinde (2) und die Spaltenden (3, 4) bildet, in dem wenigstens einen Spaltende (3; 4) einen Einbauraum (6; 7) aufweist, in dem das Spannelement (10; 10a) unmittelbar oder über ein Gelenkelement (15; 16) an einer Lagerfläche (6f, 6r, 12f, 22f, 24f; 7f, 7r, 20f, 22f) des Gelenks abgestützt ist, wobei der Mutternkörper (1) die Lagerfläche (6f, 6r; 7f, 7r) unmittelbar oder ein in dem Einbauraum (6; 7) abgestütztes Kraftaufnahmestück (24; 20, 22) die Lagerfläche (24f; 20f, 22f) bilden kann.

13. Klemmspaltmutter nach einem der vorhergehenden Ansprüche, **dadurch gekennzeichnet, dass** das Gelenk einen mit dem Spannelement (10; 10a) verbundenen Gelenkzapfen (15; 16; 32/23) und eine Lagerfläche (20f; 22f; 24f) für den Gelenkzapfen (15; 16; 32/23) aufweist, die von einem Kraftaufnahmestück (20; 22; 24) gebildet wird, um eine von dem Lagerzapfen (15; 16; 32/23) radial zu seiner Gelenkachse (C; D) ausgeübte Kraft aufzunehmen und zumindest vorwiegend tangential in das wenigstens eine gelenkig mit dem Spannelement (10; 10a) verbundene Spaltende (3; 4) einzuleiten, an dem das Kraftaufnahmestück (20; 22; 24) abgestützt ist.

14. Klemmspaltmutter nach einem der vorhergehenden Ansprüche, **dadurch gekennzeichnet, dass** ein Mutternkörper (1), der die Klemmspaltmutter bildet oder mitbildet, in wenigstens zwei Teile geteilt ist, so dass der Mutternkörper (1) auf eine Welle oder Achse aus einer Richtung quer zu der Welle oder Achse aufgesetzt und auf ein Außengewinde der Welle oder Achse aufgeschraubt werden kann.

15. Klemmspaltmutter nach einem der vorhergehenden Ansprüche, **dadurch gekennzeichnet, dass** die Klemmspaltmutter an wenigstens einer axialen Stirnseite eine Zentrierfase (30) aufweist, über die sie auf ein Ende eines Außengewindes einer Welle oder Achse zum Zwecke der Zentrierung aufgeschoben werden kann.

16. Klemmspaltmutter nach einem der vorhergehenden Ansprüche, **dadurch gekennzeichnet, dass** sie für eine axiale Fixierung eines Bauteils auf einer Welle oder Achse verwendet wird, wobei das Bauteil vorzugsweise ein Wälzlager einer großen Baueinheit oder Maschine ist, beispielsweise einer Windenergieanlage, Wasserturbine oder eines Walzwerks.

## Revendications

1. Ecrou fendu de serrage, comprenant :
a) un filetage intérieur (2) autour d'un axe longitudinal (A) dudit écrou fendu de serrage ;
b) au moins deux extrémités (3, 4) de fente qui sont tangentiellement en regard l'une de l'autre et qui forment entre elles une fente (5) ;
c) et au moins un élément de traction (10 ; 10a) accouplé avec chacune desdites extrémités (3, 4) de fente, pour exercer sur lesdites extrémités (3, 4) de fente une force qui provoque un mouvement relatif desdites extrémités (3, 4) de fente dans une direction tangentielle,
d) ledit au moins un élément de traction (10 ; 10a) étant accouplé, de manière obliquement mobile, avec au moins une desdites extrémités (3, 4) de fente par l'intermédiaire d'un assemblage qui compense un changement de direction de ladite force provoqué par ledit mouvement relatif desdites extrémités (3, 4) de fente.

2. Ecrou fendu de serrage selon la revendication 1, **caractérisé en ce que** ledit assemblage comporte des surfaces porteuses (par exemple 6f/12f, 7f/15f, 7r/15r) qui sont en contact à glissement et/ou en contact à roulement les unes avec les autres, pour compenser ledit changement de direction de ladite force, lorsque lesdites extrémités (3, 4) de fente sont tirées l'une vers l'autre et/ou sont poussées de façon à s'écarter l'une de l'autre.

3. Ecrou fendu de serrage selon l'une quelconque des revendications précédentes, **caractérisé en ce que** ledit élément de traction (10 ; 10a) est accouplé avec un élément d'assemblage (15 ; 16) dudit assemblage, ledit élément d'assemblage étant accouplé de manière rotative avec ladite au moins une extrémité (3 ; 4) de fente pour compenser ledit changement de direction de ladite force.

4. Ecrou fendu de serrage selon la revendication précédente, **caractérisé en ce que** ledit élément d'assemblage (15 ; 16) forme une surface porteuse ronde, de préférence cylindrique (15f ; 16f) sur une face orientée vers l'autre extrémité (4 ; 3) de fente et/ou une surface porteuse ronde, de préférence cylindrique (15r ; 16 r) sur une face orientée à l'opposé de l'autre extrémité (4 ; 3), ladite surface porteuse étant l'une des surfaces porteuses dudit assemblage.

5. Ecrou fendu de serrage selon l'une quelconque des revendications précédentes 3 et 4, **caractérisé en ce que** ledit élément d'assemblage (15) est un cylindre qui est accouplé, de manière à pouvoir tourner autour de son axe longitudinal (C), avec ladite au moins une extrémité (3 ; 4) de fente.

6. Ecrou fendu de serrage selon l'une quelconque des revendications précédentes, **caractérisé en ce que** ledit élément de traction (10 ; 10a) est accouplé avec lesdites extrémités (3, 4) de fente de façon qu'un mouvement de rotation dudit élément de traction (10 ; 10a) autour d'un axe (B) orienté dans la direction de ladite force provoque un mouvement relatif sur ledit axe (B) entre ledit élément de traction (10 ; 10a) et ladite au moins une extrémité (3 ; 4) de fente accouplée par l'intermédiaire dudit assemblage avec ledit élément de traction (10 ; 10a).

7. Ecrou fendu de serrage selon la revendication précédente, **caractérisé en ce que** ledit élément de traction (10 ; 10a) est vissé avec un élément d'assemblage (15 ; 16) dudit assemblage ou avec un corps (1) de l'écrou formant ladite autre extrémité (4 ; 3) de fente.

8. Ecrou fendu de serrage selon l'une quelconque des revendications précédentes, **caractérisé en ce que** ledit élément de traction (10 ; 10a) est accouplé avec lesdites extrémités (3, 4) de fente d'une manière telle que, et/ou est guidé dans des passages (6a, 7a) desdites extrémités (3, 4) de fente avec un ajustement étroit dans la direction de l'axe (A) du filetage dudit écrou fendu de serrage de telle sorte que ledit élément de traction (10 ; 10a) compense un mouvement de décalage axial desdites extrémités (3, 4) de fente.

9. Ecrou fendu de serrage selon l'une quelconque des revendications précédentes, **caractérisé en ce qu'**une (3) desdites extrémités (3, 4) de fente est pourvue d'un passage (6) dans lequel ledit élément de traction (10) peut être inséré vers l'autre (4) desdites extrémités (3, 4) de fente, et à travers lequel ledit élément de traction (10) fait saillie, une surface porteuse (6f : 24f) étant formée dans ledit passage (6), ladite surface porteuse (6f ; 24f) recevant ladite force exercée par ledit élément de traction (10) lorsque lesdites extrémités (3, 4) de fente sont tirées l'une vers l'autre.

10. Ecrou fendu de serrage selon la revendication précédente, **caractérisé en ce que** ledit élément de traction (10) comprend un épaulement de traction qui constitue un pivot dudit assemblage, ledit épaulement de traction étant de préférence constitué par une tête de traction (12 ; 32).

11. Ecrou fendu de serrage selon l'une quelconque des revendications précédentes 9 et 10, **caractérisé en ce que** ledit élément de traction (10) est accouplé avec lesdites extrémités (3, 4) de fente de telle manière qu'un mouvement de rotation dudit élément de traction (10) autour d'un axe (B) orienté dans la direction de ladite force provoque un mouvement relatif le long dudit axe (B) entre ledit élément de traction (10) et ladite au moins une desdites extrémités (3, 4) de fente, et **en ce qu'**un mouvement le long dudit axe (B) de fente ledit élément de traction (10) et l'autre desdites extrémités (3, 4) de fente est bloqué par une pièce de retenue (25).

12. Ecrou fendu de serrage selon l'une quelconque des revendications précédentes, **caractérisé en ce qu'**un corps annulaire (1) de l'écrou formant ledit filetage intérieur (2) et lesdites extrémités (3, 4) de fente comporte un espace d'installation (6 ; 7) dans ladite au moins une extrémité (3 ; 4) de fente, dans lequel ledit élément de traction (10 ; 10a) est supporté par une surface porteuse (6f, 6r, 12f, 22f, 24f ; 7f, 7r, 20f, 22f) dudit assemblage, directement ou par l'intermédiaire d'un élément d'assemblage (15 ; 16), ledit corps (1) de l'écrou pouvant former ladite surface porteuse (6f, 6r ; 7f, 7r) ou une pièce de réception de force (24 ; 20, 22) supportée dans ledit espace d'installation (6 ; 7) pouvant former ladite surface porteuse (24f ; 20f, 22f).

13. Ecrou fendu de serrage selon l'une quelconque des revendications précédentes, **caractérisé en ce que** ledit assemblage comprend un pivot (15 ; 16 ; 32/23) d'assemblage accouplé avec ledit élément de traction (10 ; 10a) et une surface porteuse (20f ; 22f ; 24f) pour ledit pivot (15 ; 16 ; 32/23) d'assemblage, ladite surface porteuse (20f ; 22f ; 24f) étant formée par une pièce de réception de force (20 ; 22 ; 24), pour recevoir une force exercée par ledit pivot (15 ; 16 ; 32/23) d'assemblage de manière radiale par rapport à son axe (C ; D) d'assemblage, et introduire celui-ci au moins de façon prédominante tangentiellement dans ladite au moins une extrémité (3 ; 4) de fente accouplée par l'intermédiaire dudit assemblage avec ledit élément de traction (10 : 10a), extrémité de fente par laquelle est supportée ladite pièce de réception de force (20 ; 22 ; 24).

14. Ecrou fendu de serrage selon l'une quelconque des revendications précédentes, **caractérisé en ce qu'**un corps (1) de l'écrou qui forme ou contribue à former ledit écrou fendu de serrage est divisé en au moins deux parties, de façon que ledit corps (1) de l'écrou puisse être placé sur un arbre ou axe depuis une direction perpendiculaire audit arbre ou axe et puisse être vissé sur un filetage extérieur dudit arbre ou axe.

15. Ecrou fendu de serrage selon l'une quelconque des revendications précédentes, **caractérisé en ce que** ledit écrou fendu de serrage comporte un chanfrein de centrage (30) sur au moins une face à orientation axiale, ledit écrou fendu de serrage pouvant être poussé jusqu'à une extrémité d'un filetage extérieur d'un arbre ou d'un axe via ledit chanfrein de centrage (30), dans le but de centrer ledit écrou fendu de serrage.

16. Ecrou fendu de serrage selon l'une quelconque des revendications précédentes, **caractérisé en ce qu'**il sert à fixer axialement une pièce sur un arbre ou un axe, ladite pièce étant de préférence un roulement à rouleaux d'un grand système ou engin de construction, par exemple un aéromoteur, une turbine hydraulique ou un laminoir.
